(19)

Europäisches
Patentamt
European
Patent Office
Office européen
des brevets

(11) **EP 3 012 779 A1**

(12) **EUROPEAN PATENT APPLICATION**

(43) Date of publication:
27.04.2016 Bulletin 2016/17

(51) Int Cl.:
*G06K 9/46* (2006.01)　　　*G06K 9/62* (2006.01)
*G06K 9/00* (2006.01)

(21) Application number: 14306677.7

(22) Date of filing: 22.10.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Thomson Licensing**
**92130 Issy-les-Moulineaux (FR)**

(72) Inventor: **Sorgi, Lorenzo**
**30655 Hannover (DE)**

(74) Representative: **Schmidt-Uhlig, Thomas**
**Deutsche Thomson OHG**
**European Patent Operations**
**Karl-Wiechert-Allee 74**
**30625 Hannover (DE)**

(54) **Method and apparatus for extracting feature correspondences from multiple images**

(57)　　A method and an apparatus (20) for extracting feature correspondences from images are described. An image dataset, features of the images and preliminary correspondences of the features are acquired (10) as input data. At least one cluster of the features is then generated (11). In a same cluster, each feature is coupled to at least one other feature as preliminary feature correspondences. For each cluster, primary feature correspondences of the features are determined (12), including a determination of consistency measures between every two features in the cluster.

Fig. 1

**Description**

**FIELD OF THE INVENTION**

This invention is related to the field of 3D vision which collects technologies and systems devoted to the extraction of a 3D geometrical model from a scene. More particularly, this invention relates to the extraction of feature correspondences from multiple images.

**BACKGROUND OF THE INVENTION**

Feature matching among multiple images, which attempts to extract correspondences between feature points in distinct and spatially separated images, is a typical and important technique for almost every 3D vision mechanism, e.g. 3D reconstruction, motion estimation, etc. Despite the variety of 3D reconstruction systems, which differ at their specific assumptions, aims and scenarios, the acquisition of a set of feature points from multiple images and the establishment of feature correspondences therefrom are essential tasks at the early stage. However, the detection of the feature correspondences might be difficult and inefficient, which results in a high ratio of false detections (outliers).
In response to the problem, random sample consensus (RANSAC) framework has been proposed and is nowadays generally integrated in most 3D reconstruction mechanisms. RANSAC is an iterative method to estimate parameters of a mathematical model from a set of observed data containing outliers [I]. It includes a nondeterministic algorithm which achieves a predefined level of performance with a certain probability and allows for further iterations with an increase of the probability. Several refinements of RANSAC have been proposed especially aiming at the problems arising in the field of computer vision, and have become some standards for geometrical model estimation [II, III, IV]. Nevertheless, the iterative algorithm of RANSAC makes it a time consuming method accompanied with the problem of the sensibility to increase the ratio of outliers in the input data sample. Moreover, although RANSAC methods are widely used for the estimation of geometrical models between two images, it has not yet been successfully employed in a complete multi-view context. Therefore, the task of multi-view 3D reconstruction, at least in the early phase of feature matching, is generally tackled as a repetition of two-view estimation based on RANSAC.
For example, structure-from-motion (SfM) is a well-known example of 3D modeling techniques without any a-priori knowledge of the camera poses, and attempts to estimate camera poses and scene structure from a sequence of uncorrelated images in the form of a point cloud [V, VI, VII]. The SfM methods utilize the techniques of Sparse Bundle Adjustment (SBA) that is a variation of a Gauss-Newton numerical optimization scheme and is designed to use the sparse nature of the error function Jacobian matrix [VIII]. A progressive SfM method processes images according to the temporal sequence thereof to track the camera pose in the overall camera trajectory and simultaneously updates the reconstructed scene. At the early step of the method, the establishment of a reliable set of feature correspondences is a crucial step for the subsequent processes.
Normally the establishment of feature correspondences is performed according to only the temporal order of the images, in which case a severe drift of the camera path is likely to happen, resulting in the infeasibility to match a current image against the whole sequence. One possible solution is to extract and use key-images to overcome the camera drift and maintain the camera track on the actual trajectory. However, during this process, a massive amount of features and matches data would appear, and decisions must be continuously taken in order to remove a high number of outliers, which can influence the camera tracking and the result of the SBA process. As a result, a high number of features would be ignored and dropped as potential outliers merely because of the deficient information to support a reliable match between a 3D point and an image feature or between two feature points. Outcome of this approach are the proliferation of compact clusters of 3D points in the reconstructed scene and the disappearance of correct points dropped as outliers soon after their instantiation, which would not be recovered afterwards. This is, however, opposite to the requirement of a robust input dataset for a successful exploitation of SBA, of which the 3D points are uniformly spread in the 3D volume and the features included in the input dataset are as many as possible.

**SUMMARY OF THE INVENTION**

Therefore, it is an objective of the present invention to propose a method and an apparatus to extract a reliable dataset of feature correspondences from images.
According to the invention, the method comprises: acquiring features of the images and preliminary feature correspondences of the features; generating at least one cluster of the features; and determining for each cluster primary feature correspondences of the features. In a same cluster, each feature is coupled to at least one other feature as preliminary feature correspondences.
In one embodiment, the method further comprises iterating said determining primary feature correspondences for each cluster. The iteration is terminated when the amount of the features not determined as primary feature correspondences is smaller than a threshold.

In one embodiment, the method is introduced as an additional stage within a standard SfM pipeline before performing an SBA refinement, aiming at the re-gathering of a more compact and exhaustive dataset as an input for the SBA processing. The attempt is to resume as many features as possible from those that have been previously dropped and to condense 3D points into compact clusters.

In another embodiment, the preliminary feature correspondences are extracted from the acquired features using a basic matcher, without assistance of any outlier-pruning technique. The acquired features are combined and reassembled into clusters, which are represented by undirected graphs. The features of the clusters are defined as nodes, and a consistency measure between two features is defined as the weight of an edge connecting two corresponding nodes of the two features. The graph weights, which represent the coherence of a match with the camera geometrical models, are computed using statistical distributions of the epipolar distance and the reprojection error determined by the matches. The set of graphs are then iteratively segmented using a spectral segmentation technique.

Accordingly, an apparatus configured to extract feature correspondences from images is introduced, which comprises an acquiring unit and an operation unit. The acquiring unit is configured to acquire features of the images and the preliminary feature correspondences of the features. The operation unit is configured to generate at least one cluster of the features and to determine for each cluster primary feature correspondences of the features.

Also, a computer readable storage medium has stored therein instructions for extracting feature correspondences from images, which when executed by a computer, cause the computer to: acquire features of the images and preliminary feature correspondences of the features; generate at least one cluster of the features; and determine for each cluster primary feature correspondences of the features.

The method of this invention provides an improved solution for the extraction of reliable matches from multiple localized views, exploiting simultaneously the constraints of the camera cluster geometry. The feature correspondences extracted according to the method provides a promising input for further processing, e.g. multi-view triangulation, Sparse Bundle Adjustment, etc. Such a technique can be easily and successfully integrated in any feature-based 3D vision application. For example, the method can be integrated directly within the progressive SfM processing as an innovative framework for feature tracking, and the refinement of the extraction of feature correspondences allows for a significant improvement of the overall accuracy achieved by the SfM processing.

## BRIEF DESCRIPTION OF THE DRAWINGS

For a better understanding the invention shall now be explained in more detail in the following description with reference to the figures. It is understood that the invention is not limited to this disclosed exemplary embodiments and that specified features can also expediently be combined and/or modified without departing from the scope of the present invention as defined in the appended claims.

Fig. 1    is a flow chart illustrating one preferred embodiment of a method for extracting feature correspondences from images according to the present invention.

Fig. 2    shows three exemplary camera linking strategies which can be utilized in the preferred embodiment of the method.

Fig. 3    shows a statistical model of angular epipolar geometry distances acquired in the preferred embodiment of the method.

Fig. 4    shows a statistical model of an angular reprojection error acquired in the preferred embodiment of the method.

Fig. 5    schematically illustrates a growing strategy of clusters represented by graphs utilized in the preferred embodiment of the method.

Fig. 6    shows an exemplary result obtained from the preferred embodiment of the method.

Fig. 7    is a schematic diagram illustrating an apparatus configured to perform the method according to this invention.

## DETAILED DESCRIPTION OF PREFERRED EMBODIMENTS

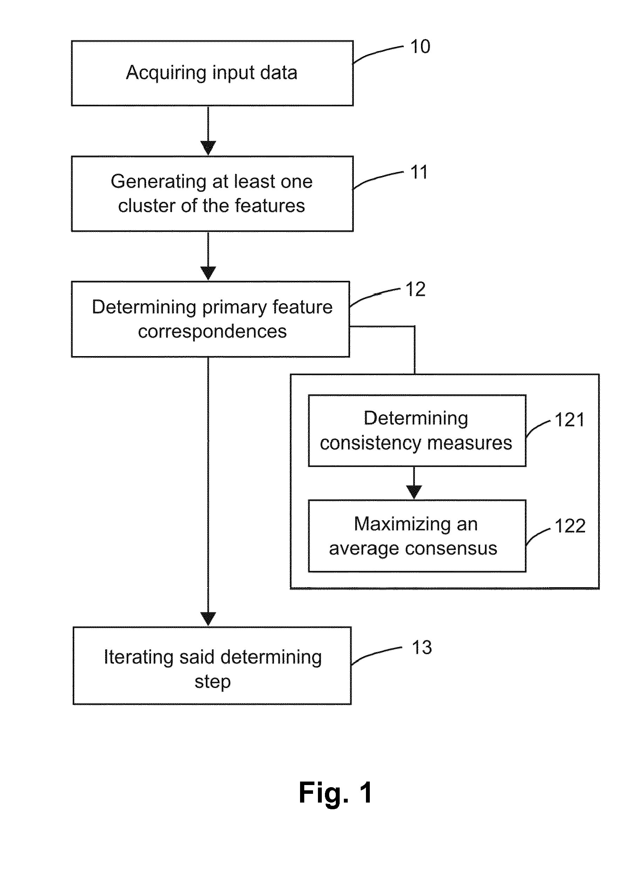

Fig. 1 schematically illustrates a preferred embodiment of the method according to this invention to extract feature correspondences from images. The method comprises: acquiring 10 input data including an image dataset, features of the images and preliminary feature correspondences of the features; generating 11 at least one cluster of the features, wherein, in a same cluster, each feature is coupled to at least one other feature as preliminary feature correspondences; and determining 12 for each cluster primary feature correspondences of the features, after which there is an initial amount of features that are not determined as the the primary feature correspondences. The term "feature" is widely used in the field and thus can be understood by a skilled person in the art as its general meaning. For example, a feature point or a feature can be referred as a pixel location in an image space from which a feature is extracted.

In one embodiment, the method further comprises iterating 13 said determining primary feature correspondences. The iterating 13 step can be repeated several times depending on different demands, and can be terminated according to various conditions. For example, the iterating 13 can be terminated when the amount of the features not determined as primary feature correspondences is smaller than a given threshold. The specific threshold can of course be given by a user or calculated and provided automatically by an apparatus.

Preferably, the input data further includes a set of camera poses in the 3D space, the statistical distributions and/or the epipolar distance and the reprojection errors responsive to the preliminary feature correspondences. Of course, the input data is not limited to the above mentioned data and can include other types of data.

The image dataset included in the input data can be acquired by any known methods. For example, the images can be captured by a set of calibrated and fixed cameras, or by a multi-view stereo camera system. In alternative, the images can also be extracted from a video sequence which is captured by a camera and subjected to a SfM processing.

In the preferred embodiment, the method is exemplarily implemented and applied as an intermediate stage of a general progressive SfM processing and is described in detail below. The implementation particularly aims at the refinement of an input dataset for an SBA stage of the SfM processing. It should be noted that this embodiment shows merely an exemplary implementation of the method of this invention, and the method can of course be used in any other suitable processing and techniques.

Upon the acquisition of the image dataset, preliminary feature correspondences are extracted and obtained by processing the images with a feature selector followed by a feature matcher. In this embodiment, SIFT techniques are utilized as the feature extractor to extract the features of the images, and the Nearest Neighbor Distance Ratio is used as a matching measure to match and select the preliminary feature correspondences. Alternatively, other techniques and other feature types can also be implemented for the extraction of feature correspondences, which are independent of and do not influence the subsequent steps 11, 12 of the method of this invention. Specifically, the preliminary feature correspondences are acquired without any specific outlier rejection scheme. In other words, the original matches of the features, which are considered as the preliminary feature correspondences and are included in the input data, can be acquired by any basic matcher.

For the computation of the feature correspondences, a subset of linked image pairs among the image dataset is selected according to their spatial proximity. In the case where the image dataset is captured by a set of static cameras, the subset of linked image pairs can be easily assembled by grouping cliques of neighboring views. For this embodiment implemented in an SfM processing, it is required to extract a spanning tree from a subset of chosen keyframes of an original video sequence, followed by selecting and connecting the paired views. A camera distance matrix proposed in European Patent Application EP13305993.1 by the same inventor is particularly used here for the computation of the minimum spanning tree that connects the keyframe set.

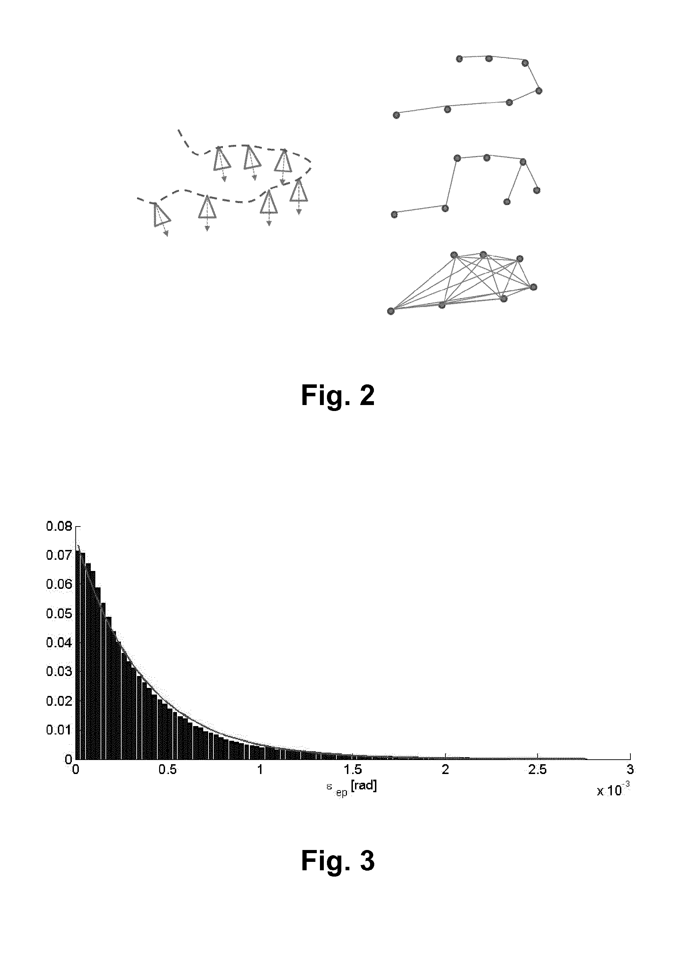

As mentioned above, the choice of the camera- or view-linking strategy is independent of and does not influence the exploitation of the method and the subsequent steps 11, 12 thereof. Fig. 2 shows three exemplary camera linking strategies, either of which can be arbitrarily selected and utilized in the preferred embodiment. The dotted line on the left side sketches a camera trajectory, and the three possible linking strategies on the right side are respectively following the camera trajectory, using a spatial proximity spanning tree technique, and the full linking graph.

A set of camera poses is preferably included in the provided input data. In this embodiment, a sequence of $3 \times 4$ metric projection matrices are used, which represent the rigid motion between the reference frame of the camera system and the reference frame of the point cloud coordinates and are provided by a camera tracker during the typical SfM processing. The motion of the unconstrained moving camera is analyzed in order to extract a subset of keyframes, contributing to further processes and also reducing the visual information redundancy. In the case when a set of static camera is used, the camera poses can be assumed available as a fixed input pre-computed via calibration and all the captured images can be implicitly labeled as keyframes. It is assumed that, in either case, a set of images, which are dislocated in the 3D space and have a sufficient level of overlap among the field of views, is located and provided in the input data. This assumption is reasonable and easily achieved by, for example, an SfM processing or a multi-view stereo reconstruction system. The input data preferably further includes the statistical distribution of the error measures, i.e., epipolar distances and reprojection errors responsive to the preliminary feature correspondences, which are typically used as indicators for the reliability of the feature matching. The epipolar distance is computed from pairs of matched features in distinct images and represents the coherence of the match with the corresponding two-view epipolar geometry. The reprojection error measures the distance between the analytical projection of a 3D point on a single view and the corresponding image feature. When the cameras are arranged in a rigid cluster and the scene volume is always unchanged and irrespective to an inspected object, the epipolar distances and the reprojection errors can be regarded as random variables, which are independent of the image content. A statistical model can thus be easily inferred for the database of the previously computed 3D reconstructions.

In this preferred embodiment implemented in an SfM processing, a statistical model can be extracted on-the-fly by collecting frame-by-frame the error data and fitting the models once the data samples have reached a sufficient size. Specifically, an exponential model is utilized to represent the statistics of the error measures, i.e., epipolar distances and reprojection errors. Fig. 3 shows the statistical model of the angular epipolar geometry distances, which has been computed from a sample of 1e6 2D-2D matches. 99% of the histogram are used to characterize an exponential model represented by the curve:

$$pdf(x) = \lambda e^{-\lambda x}, \ \lambda = 2752.58.$$

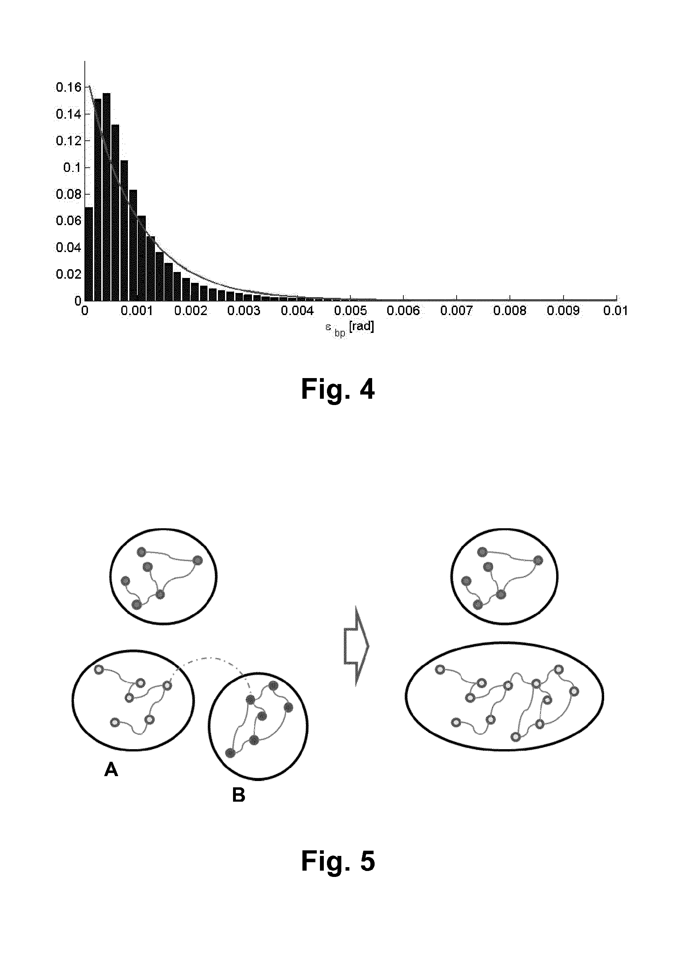

Similarly, Fig. 4 shows the statistic model of the angular reprojection error, which has been computed from a sample of 1e6 2D-2D matches. 99% of the histogram are used to characterize an exponential model represented by the curve:

$$pdf(x) = \lambda e^{-\lambda x}, \ \lambda = 1056.28.$$

Of course, other clustering techniques can also be used to generate the statistical models and are independent of and do not influence the subsequent steps 11, 12 of the method of this invention.

The acquired features and the preliminary feature correspondences from the input data are used to generate 11 at least one cluster of the features. In a same cluster, each feature is coupled to at least one other feature as preliminary feature correspondences. In other words, the preliminary feature correspondences determine the development of the feature clusters.

In this preferred embodiment, the feature clusters are represented in a form of connected and undirected graphs, in which each feature is defined as a node. In addition, a growing strategy is implemented on the clusters to assemble in a same cluster any feature that is coupled to at least one other feature as preliminary feature correspondence. The growing strategy excludes any consistency check and outlier rejection schemes to allow more relevant features being included and combined into clusters, each of which includes an unknown number of outliers and potentially more than one group of actual corresponding features. This aims at collecting in a single cluster the whole native information provided by the preliminary feature correspondences of the input data, and thus generates bigger clusters.

Fig. 5 schematically illustrates the growing strategy of the clusters represented by graphs. Each ellipse represents a graph of a cluster, within which a small dot represents a single feature. The curved lines connecting any two dots show a pair of preliminary feature correspondences. The dotted line on the left side indicates a pair of preliminary feature correspondences, of which one feature is in graph A and another one in graph B. According to the growing strategy, the graphs A and B are relevant to each other and thus are combined into a bigger graph (i.e. cluster). This situation happens in particular when periodic textures are present in the images of the input data, which typically produce features with similar descriptors associated to physically distinct locations.

Subsequent to the generation of the feature clusters, primary feature correspondences of the features are determined 12 respectively for each cluster. As shown in Fig. 1, in this preferred embodiment, this is accomplished by determining 121 consistency measures between every two features in one cluster and maximizing 122 an average consensus of the consistency measures of the cluster. The consistency measure between two features is relevant to an epipolar distance and a triangulation result determined by the two features. Referring to the above graph representation of the clusters and the features, a consistency measure between two features is defined as the weight of an edge connecting two corresponding nodes of the two features. Accordingly, maximizing 122 an average consensus is conducted by performing spectral segmentation on the graph of the cluster.

A consistency measure $\omega_{i,j}$ between two features (i.e., two nodes $i$ and $j$) is determined 121 as the sum of three contributes:

$$\omega_{i,j} = \Pr\{\varepsilon_{ep} > \phi_{i,j}\} + \max_{\substack{P \in S_i \\ P \notin S_j}} \left\{\Pr\{\varepsilon_{bp} > \beta_j(P)\}\right\} + \max_{\substack{P \in S_j \\ P \notin S_i}} \left\{\Pr\{\varepsilon_{bp} > \beta_i(P)\}\right\}.$$

$$(1)$$

The first contribute is given by the probability that the epipolar distance variable assumes a value greater than the the one determined by the features $i$ and $j$, where the latter is denoted as $\phi_{i,j}$. The probability measure is computed by analytical integration of the probability density function provided in the initial input data and as shown in Fig. 3. The value of this term approaches **1** as the epipolar distance decreases, namely when the epipolar geometry is compliant with the match hypothesis.

For the characterization of the other two contributes, a notation $S_k$ is introduced to represent a set of 3D points that can be triangulated from a pair of features including a feature $k$. When the cluster in which the feature $k$ is included comprises a number of $N$ features, the maximal cardinality of the set $S_k$ would be $N$-1. This is possibly lower if some feature pairs are not admissible for triangulation, i.e., the feature pairs are in a same image of the input data. Accordingly, $S_i$ and $S_j$ represent the sets of 3D points triangulated respectively using the features $i$ and $j$.

To compute the consistency measure as shown in the above formula, the set of points triangulated using either feature $i$ or $j$ are back-projected towards the other feature, and the one providing the minimum backprojection error is used and selected. Similarly, this is performed by analytical integration of the corresponding probability density function provided in the input data and as shown in Fig. 4. Using the above formula and the corresponding calculation, it is to search a 3D point that is the most geometrically consistent with the feature $j$, among those that can be triangulated from feature $i$; and vice versa, from $j$ to $i$.

The at least one cluster is then segmented by maximizing 122 an average consensus of the consistency measures of the cluster:

$$\begin{cases} \bar{u} = \underset{u \in \{0,1\}^N}{\operatorname{argmax}} r(u) \\ r(u) = \dfrac{u^T W u}{u^T u} \end{cases}$$

where $u$ is a binary valued N-dimensional vector representing the cluster segmentation and $W$ is the symmetric $N \times N$ real valued matrix collecting the consistency measure ($\omega_{i,j}$) between the feature pairs in one cluster. As mentioned in [IX], there is no known polynomial-time solution to maximize this function when $u$ is a discrete-valued indicator vector. However, an approximate solution can be found by relaxing the constraint on $u$, allowing its elements to take any positive real value. The problem here is then the maximization of the Rayleigh quotient of the matrix $W$, of which one solution can be given by the dominant eigenvector of $W$, namely the one associated to the maximum eigenvalue [X]. The vector $u$ is then projected onto a final solution $v$ belonging to the binary discrete space by sequentially setting to the elements of $v$ until the consensus $r(v)$ is maximized. The vector $v$ is initialized to be **0** and its elements are flipped to decrease the ordering of $u$.

It has been shown above that the growing strategy does not guarantee a unique group of corresponding features inside a single cluster (graph). Specifically, consistent groups of features that actually attain to a reduced number of distinct 3D points are assembled into a same cluster. In other words, the result of the step of determining 12 the primary feature correspondences for each cluster might not be optimized and might exclude an amount of features as outliers from the set of the primary feature correspondences. One solution to cope with the possible situation is to iterate 13 said determining step and to adjust the result and the corresponding outliers.

In one embodiment, the amount of the outliers is the indicator for such iteration and adjustment. For example, when an initial amount of features are excluded and considered as outliers from the primary feature correspondences after the determining 12 step, the iterating 13 is subsequently performed such that a second amount of the outliers is smaller than the initial amount, i.e., more features are determined as primary feature correspondences and less features are excluded as outliers. Accordingly, the iterating 13 can be terminated when the amount of the outliers is smaller than a threshold which can be predetermined by a user or automatically given by an apparatus. Of course, other termination conditions for the iterating 13 can also be applied depending on different demands.

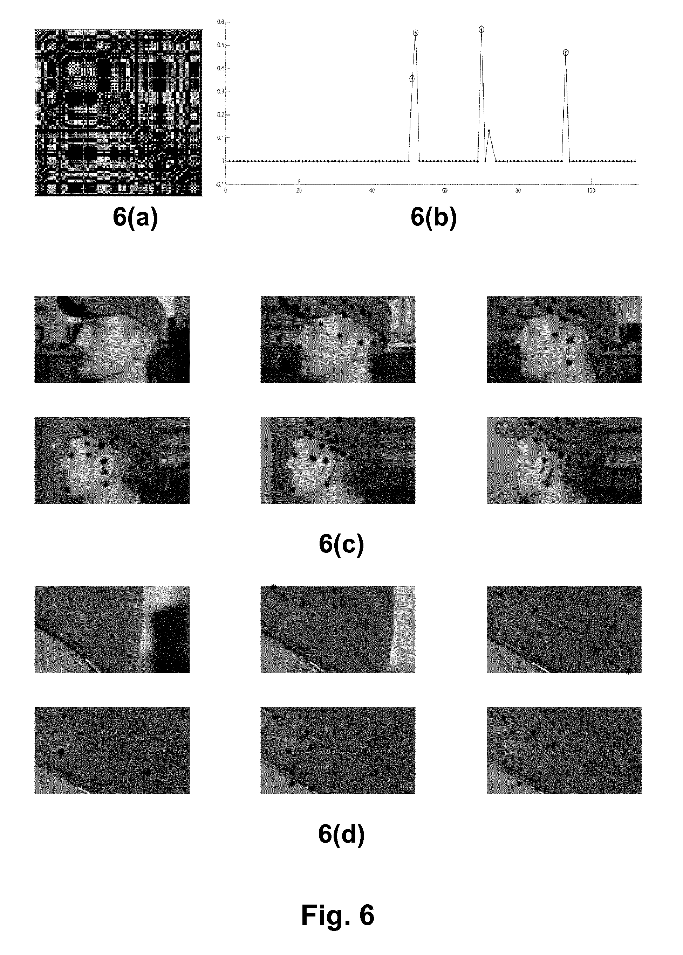

Fig. 6 shows an implementation example of the above preferred embodiment. The example is performed on a monoscopic sequence captured with a non-calibrated DSLR camera. The camera is fixed on a tripod and the subject is rotated using a rotating support.

From the original 235 frames of the sequence, 7 keyframes and corresponding camera poses are extracted by processing the sequence with a keyframe-based SfM engine proposed by the same inventor in European Patent Application EP13305993.1. The minimum spanning tree providing the optimal spatial linking of the image features is subsequently computed. From the image dataset of the input data as well as the image features and preliminary feature correspondences extracted therefrom, about 1500 clusters of the features are generated and about 500 clusters thereof are successfully segmented and triangulated.

Figs. 6(a) and 6(b) respectively show the weight matrix of graph edges collecting the feature matching scores defined in the above mentioned Equation (1) and the dominant eigenvector thereof. The image set and the features included in the specific cluster are shown in Fig. 6(c), where inliers (i.e. the determined primary feature correspondences) and outliers for the features are respectively labelled by the symbols "+" and "*". The symbol "o" denotes the analytical back-projections plotted as visual control on the segmented features. The images in Fig. 6(d) show the details of the inliers region of each view in Fig. 6(c).

The results obtained from the above example show the capability of the embodiment to re-gather all the image features consistently correspond to a single 3D point from a highly cluttered set of matches. This makes the method of this invention useful for the refinement of feature correspondences dataset used in a final Bundle Adjustment of a Structure from Motion architecture or in a multi-view stereo reconstruction system.

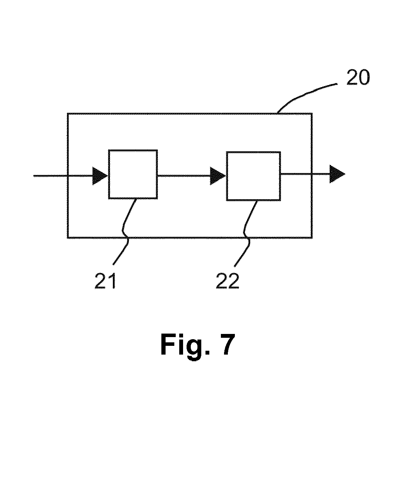

Fig. 7 schematically shows an apparatus 20 configured to perform the method according to this invention. The apparatus 20 extracts feature correspondences from images and comprises an acquiring unit 21 and an operation unit 22. The acquiring unit 21 is configured to acquire features of the images and preliminary feature correspondences of the features. The operation unit 22 is configured to generate at least one cluster of the features and to determine for each cluster primary feature correspondences of the features. In a same cluster, each feature is coupled to at least one other feature as preliminary feature correspondences. Preferably, the operation unit is further configured to iterate 13 said determining primary feature correspondences for each cluster.

In one embodiment, the operation unit 22 is further configured to determine consistency measures between every two features in a cluster and to maximize an average consensus of the consistency measures of the cluster to determine primary feature correspondences. The consistency measure between two features is relevant to an epipolar distance and a triangulation result determined by the two features. Furthermore, the operation unit 22 is also configured to define the cluster as a graph, each feature thereof as a node, and the consistency measure between two features as the weight of an edge connecting two corresponding nodes of the two features, and accordingly to perform spectral segmentation on the graph of the cluster.

## REFERENCES

[I] M. A. Fischler and R. C. Bolles, "Random sample consensus: a paradigm for model fitting with applications to image analysis and automated cartography," Comm. Of the ACM, 24(6): 381-395, 1981.

[II] P. H. S. Torr and D. W. Murray, "The development and comparison of robust methods for estimating the fundamental matrix," Int. Journal of Computer Vision, 24(3): 271-300, 1997.

[III] O. Chum, "Two-view geometry estimation by random sample and consensus" PhD thesis, Czech Technical University in Prague, 2005.

[IV] S. Choi, T. Kim, and W. Yu, "Performance evaluation of RANSAC family," In proceedings of BMVC, British Machine Vision Association, 2009.

[V] R. Hartley and A. Zisserman, Multiple View Geometry in Computer Vision (2 ed.). Cambridge University Press, New York, NY, USA, 2003

[VI] E. Arbogast and R. Mohr, "3D structure inference from image sequences," Int. Journal of Pattern Recognition and Artificial Intelligence 5, 5, pp. 749-764, 1991

[VII] C. Tomasi and T. Kanade, "Shape and motion from image streams under orthography: a factorization method," Int. Journal of Computer Vision, 9(2): 137-154, 1992

[VIII] M. I. A. Lourakis and A. A. Argyros, "SBA: A software package for generic sparse bundle adjustment," ACM Trans. Math. Software, 36(1), 2009

[IX] E. Olson, M. Walter, J. Leonard and S. Teller, "Single cluster spectral graph partitioning for robotics applications," Proc. of Robotics Science and Systems, pp. 265-272, 2005.

[X] L. N. Trefethen and D. Bau, Numerical Linear Algebra, SIAM, 1997

**Claims**

1. A method for extracting feature correspondences from images, comprising:

   - acquiring (10) features of the images and preliminary feature correspondences of the features;
   - generating (11) at least one cluster of the features, wherein, in a same cluster, each feature is coupled to at least one other feature as preliminary feature correspondences; and
   - determining (12) for each cluster primary feature correspondences of the features.

2. The method of claim 1, further comprising:

   - iterating (13) said determining primary feature correspondences for each cluster.

3. The method of claim 1 or 2, wherein, for each cluster, an initial amount of features are not determined as the primary feature correspondences, and the method further comprising:

   - iterating (13) said determining primary feature correspondences such that a second amount of the features not determined as the primary feature correspondences is smaller than the initial amount.

4. The method of claim 3, wherein iterating (13) said determining primary feature correspondences is terminated when the amount of the features not determined as primary feature correspondences is smaller than a threshold.

5. The method of any one of the preceding claims, wherein determining (12) primary feature correspondences for each cluster comprises:

   - determining (121) consistency measures between every two features in the cluster, the consistency measure between two features being relevant to an epipolar distance and a triangulation result determined by the two features; and
   - maximizing (122) an average consensus of the consistency measures of the cluster to determine primary feature correspondences.

6. The method of claim 5, wherein said determining (12) primary feature correspondences for each cluster comprises:

   - defining the cluster as a graph, each feature thereof as a node, and the consistency measure between two features as the weight of an edge connecting two corresponding nodes of the two features; and
   - performing spectral segmentation on the graph of the cluster.

7. The method of any one of the preceding claims, further comprising:

   - acquiring a set of camera poses in the 3D space responsive to the preliminary feature correspondences of the features.

8. An apparatus (20) configured to extract feature correspondences from images, comprising:

   - an acquiring unit (21) configured to acquire features of the images and preliminary feature correspondences of the features; and
   - an operation unit (22) configured to
   generate at least one cluster of the features, wherein, in a same cluster, each feature is couple to at least one other feature as preliminary feature correspondences; and

determine for each cluster primary feature correspondences of the features.

9. The apparatus of claim 8, wherein the operation unit (22) is configured to iterate said determining primary feature correspondences for each cluster.

10. The apparatus of claim 8 or 9, wherein the operation unit (22) is configured to
determine consistency measures between every two features in a same cluster, the consistency measure between two features being relevant to an epipolar distance and a triangulation result determined by the two features; and maximize an average consensus of the consistency measures of the cluster to determine primary feature correspondences.

11. The apparatus of claim 10, wherein the operation unit (22) is configured to
define the cluster as a graph, each feature thereof as a node, and the consistency measure between two features as the weight of an edge connecting two corresponding nodes of the two features; and perform spectral segmentation on the graph of the cluster.

12. A computer readable storage medium having stored therein instructions for extracting feature correspondences from images, which when executed by a computer, cause the computer to:

- acquire features of the images and preliminary feature correspondences of the features;
- generate at least one cluster of the features, wherein, in a same cluster, each feature is coupled to at least one other feature as preliminary feature correspondences; and
- determine for each cluster primary feature correspondences of the features.

Fig. 1

**Fig. 2**

**Fig. 3**

Fig. 4

Fig. 5

6(a)

6(b)

6(c)

6(d)

# Fig. 6

**Fig. 7**

Europäisches
Patentamt

European
Patent Office

Office européen
des brevets

# EUROPEAN SEARCH REPORT

Application Number

EP 14 30 6677

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OLSON ET AL: "Recognizing places using spectrally clustered local matches", ROBOTICS AND AUTONOMOUS SYSTEMS, ELSEVIER SCIENCE PUBLISHERS, AMSTERDAM, NL, vol. 57, no. 12, 31 December 2009 (2009-12-31), pages 1157-1172, XP026746012, ISSN: 0921-8890, DOI: 10.1016/J.ROBOT.2009.07.021 [retrieved on 2009-07-29] * Section 4. "Robust place recognition" * | 1-12 | INV. G06K9/46 G06K9/62 G06K9/00 |
| X,D | E. OLSON; M. WALTER; J. LEONARD; S. TELLER: "Single cluster spectral graph partitioning for robotics applications", PROC. OF ROBOTICS SCIENCE AND SYSTEMS, 2005, pages 265-272, XP002739686, * Section III. "Algorithm overview" - Section V. "Applications and results" * | 1-12 | |
| X | US 2014/267614 A1 (DING YUANYUAN [US] ET AL) 18 September 2014 (2014-09-18) * paragraph [0127] - paragraph [0136]; figures 11-16 * | 1,2,8,9, 12 | TECHNICAL FIELDS SEARCHED (IPC) |
| X | US 2011/110581 A1 (YANG HYUN SEUNG [KR] ET AL) 12 May 2011 (2011-05-12) * paragraph [0034] - paragraph [0074]; figures 2-6 * | 1,2,8,9, 12 | G06K |
| A | US 2014/029856 A1 (CAI RUI [CN] ET AL) 30 January 2014 (2014-01-30) * the whole document * | 1-12 | |

-/--

The present search report has been drawn up for all claims

| Place of search | Date of completion of the search | Examiner |
|---|---|---|
| The Hague | 19 May 2015 | Grigorescu, Cosmin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Olivier Duchenne: "Non-rigid image alignment for object recognition", , 29 November 2012 (2012-11-29), XP055189631, Retrieved from the Internet: URL:http://www.theses.fr/2012DENS0070/document [retrieved on 2015-05-15] * Chapter 2. "A tensorial formulation for hyper-graph matching" * ----- | 1-12 | |

TECHNICAL FIELDS
SEARCHED      (IPC)

The present search report has been drawn up for all claims

| Place of search | Date of completion of the search | Examiner |
|---|---|---|
| The Hague | 19 May 2015 | Grigorescu, Cosmin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 30 6677

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2015

| Patent document cited in search report | | Publication date | Patent family member(s) | | Publication date |
|---|---|---|---|---|---|
| US 2014267614 | A1 | 18-09-2014 | NONE | | |
| US 2011110581 | A1 | 12-05-2011 | KR 20110053288 A<br>US 2011110581 A1 | | 20-05-2011<br>12-05-2011 |
| US 2014029856 | A1 | 30-01-2014 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 13305993 A

**Non-patent literature cited in the description**

- **M. A. FISCHLER ; R. C. BOLLES.** Random sample consensus: a paradigm for model fitting with applications to image analysis and automated cartography. *Comm. Of the ACM,* 1981, vol. 24 (6), 381-395
- **P. H. S. TORR ; D. W. MURRAY.** The development and comparison of robust methods for estimating the fundamental matrix. *Int. Journal of Computer Vision,* 1997, vol. 24 (3), 271-300
- **O. CHUM.** Two-view geometry estimation by random sample and consensus. *PhD thesis,* 2005
- **S. CHOI ; T. KIM ; W. YU.** Performance evaluation of RANSAC family. *proceedings of BMVC*
- **R. HARTLEY ; A. ZISSERMAN.** Multiple View Geometry in Computer Vision. Cambridge University Press, 2003
- **E. ARBOGAST ; R. MOHR.** 3D structure inference from image sequences. *Int. Journal of Pattern Recognition and Artificial Intelligence,* 1991, vol. 5 (5), 749-764
- **C. TOMASI ; T. KANADE.** Shape and motion from image streams under orthography: a factorization method. *Int. Journal of Computer Vision,* 1992, vol. 9 (2), 137-154
- **M. I. A. LOURAKIS ; A. A. ARGYROS.** SBA: A software package for generic sparse bundle adjustment. *ACM Trans. Math. Software,* 2009, vol. 36 (1
- **E. OLSON ; M. WALTER ; J. LEONARD ; S. TELLER.** Single cluster spectral graph partitioning for robotics applications. *Proc. of Robotics Science and Systems,* 2005, 265-272
- **L. N. TREFETHEN ; D. BAU.** Numerical Linear Algebra. *SIAM,* 1997